# EUROPÄISCHE PATENTSCHRIFT

(11) **EP 1 405 124 B1**
(45) Veröffentlichungstag und Bekanntmachung des Hinweises auf die Patenterteilung: **09.11.2005**
(21) Anmeldenummer: 02740318.7
(22) Anmeldetag: 04.05.2002
(51) Int. Cl.: G02B 27/01, B60R 1/00

(54) **HEAD-UP DISPLAY SYSTEM UND VERFAHREN ZUR PROJEKTION EINER MARKIERUNG EINES VERKEHRSZEICHENS IN BEZUG AUF DIE BLICKRICHTUNG DES FAHRERS**
HEAD-UP DISPLAY SYSTEM AND METHOD FOR PROJECTING A MARKING OF A ROAD SIGN WITH REGARD TO THE VIEWING DIRECTION OF THE DRIVER
SYSTEME DE VISUALISATION TETE HAUTE ET PROCEDE DE PROJECTION D'UN MARQUAGE D'UN PANNEAU DE SIGNALISATION EN RAPPORT AVEC LA DIRECTION DE REGARD DU CONDUCTEUR

(30) Priorität: 30.06.2001 DE 10131720
(43) Veröffentlichungstag der Anmeldung: 07.04.2004
(73) Patentinhaber: ROBERT BOSCH GMBH, 70442 Stuttgart (DE)
(72) Erfinder: JANSSEN, Holger, 31840 Oldendorf (DE)
(86) Internationale Anmeldenummer: PCT/DE2002/001619
(87) Internationale Veröffentlichungsnummer: WO 2003/005102

(56) Entgegenhaltungen:
- EP-A- 1 035 455
- WO-A-01/29640
- WO-A-01/45080
- DE-A- 4 032 927
- US-A- 3 737 902
- US-A- 4 908 611
- PATENT ABSTRACTS OF JAPAN vol. 1996, no. 02, 29. Februar 1996 (1996-02-29) -& JP 07 257228 A (NISSAN MOTOR CO LTD), 9. Oktober 1995 (1995-10-09)

## Beschreibung

Die Erfindung betrifft ein Head-Up Display System, insbesondere zur Anwendung in einem Navigationssystem und einem System für automatische Cruise Control, sowie ein entsprechendes Verfahren und Computerprogrammprodukt.

Sogenannte Head-Up Display Systeme sind an sich zur Anwendung für militärische Kampfflugzeuge bekannt. Beispielsweise ist aus US-A-6 161 062 ein Anzeigesystem für den Piloten eines Flugzeugs mit einem Head-Up Display bekannt. Über das Head-Up Display wird dem Piloten beispielsweise ein künstlicher Horizont eingeblendet sowie Flugdaten, z. B. betreffend die Flughöhe und Geschwindigkeit, die von Sensoren aufgenommen werden.

Aus US-A-4 775 218 und US-A- 5 572 203 ist das Problem der korrekten Überlagerung von zu projizierenden Symbolen in einem Militärflugzeug bekannt. Zur Lösung dieses Problems werden unter anderem optische Systeme mit einem Laserstrahl für die entsprechende Korrektur der Darstellung vorgeschlagen.

In Fahrzeugen, insbesondere Kraftfahrzeugen, erfolgt dagegen die Darstellung von Informationen für den Fahrer im Allgemeinen über das Armaturenbrett und über die Anzeige eines Navigationssystems. Nachteilig hierbei ist, dass der Fahrer seinen Blick kurzfristig von der Fahrbahn ablenken muss, um die entsprechenden Information aufzunehmen.

Aus der US-A 5519 536 ist ein Warnsystem zur Anzeige von Informationen auf einem Head-Up Display in einem Fahrzeug bekannt. Eine solche Warnung wird beispielsweise bei Unterschreiten eines Mindestabstands zu einem vorausfahrenden Fahrzeugs angezeigt, wobei die Größe des angezeigten Warnhinweises mit kleiner werdendem Abstand steint

Aus US-A- 5 969 969 ist ein System zur Fahrerassistenz bekannt, welches Objekte in der Umgebung des Fahrzeugs erfasst und daraus für den Fahrer entsprechende Informationen generiert. Diese Informationen können auf einem Head-Up Display angezeigt werden.

Weitere Systeme sind aus WO 012 964, JP 07 257 228 und WO 0 145 080 bekannt.

Verschiedene Head-Up Display Systeme sind ferner aus US-A-5 812 332, US-A 5719 567 und US-A-5 801 667 bekannt.

Der Erfindung liegt die Aufgabe zu Grunde, ein verbessertes Head-Up Display System für ein Fahrzeug, insbesondere ein verbessertes Navigationssystem und ein System zur automatischen Cruise Control, sowie ein entsprechendes Verfahren und Computerprogrammprodukt zu schaffen.

Die der Erfindung zu Grunde liegende Aufgabe wird jeweils mit den Merkmalen der unabhängigen Patentansprüche gelöst.

Bevorzugte Ausführungsformen der Erfindung sind in den abhängigen Patentansprüche angegeben.

Die Erfindung erlaubt es Objekte im Fahrzeugaußenraum für einen oder mehrere Insassen eines Fahrzeugs, insbesondere für den Fahrer und / oder den Beifahrer, so darzustellen, dass die Objekte an der korrekten Position wahrgenommen werden, das heißt, die betreffende Insasse des Fahrzeugs blickt durch das Head-Up Display wie durch eine Brille auf den realen Fahrzeugaußenraum. Die korrekte Überlagerung der projizierten Objekte mit dem realen Fahrzeugaußenraum wird im weiteren als ortskorrekte Darstellung bezeichnet.

Die Erfindung ermöglicht die ortskorrekte Darstellung durch die Erfassung der Position des betreffenden Insassen. Vorzugsweise wird dabei die Position des Kopfes erfasst. Besonders gute Ergebnisse erhält man, wenn die Position der Augen bzw. die Blickrichtung der Augen erfasst wird.

Bewegt beispielsweise der Fahrer seinen Kopf durch Drehen oder durch eine Beugebewegung oder verändert sich die Blickrichtung des Fahrers, so wird dies durch entsprechende Sensoren im Fahrzeuginnenraum erfasst und die Darstellung auf dem Head-Up Display entsprechend angepasst.

Aufgrund dessen ermöglicht die Erfindung beispielsweise die auf dem Head-Up Display gezeigte virtuelle Darstellung auf die aktuelle Straßenverkehrsszene auszurichten. Die Projektion des Head-Up Display und die betrachtete reale Szene passen also zueinander, so dass dem Fahrer eine optimale Hilfestellung gegeben wird.

Dies ist insbesondere in kritischen Fahrsituation von großer Wichtigkeit. Beispielsweise kann von Sensoren zur Erfassung des Fahrzeugaußenraums ein Wildtier im Dunkeln, z. B. mittels eines Infrarotsensors, erfasst werden. Ein das Wildtier repräsentierendes Symbol wird dann auf dem Head-Up Display ortskorrekt dargestellt, so dass der Fahrer hierauf unmittelbar reagieren kann, ohne dass der Fahrer hierzu zunächst andere Anzeigegeräte interpretieren muss. Aufgrund dessen ist sichergestellt, dass keine wertvolle Zeit für eine schnelle Reaktion verloren geht.

Ein besonderer Vorteil der Erfindung ist darin zu sehen, dass durch die ortskorrekte Darstellung in Abhängigkeit von der Position des betreffenden Insassen ein direkter Zusammenhang zwischen der realen Fahrzeugaußenwelt und einer überlagerten virtuellen Darstellung hergestellt ist.

In einer bevorzugten Ausführungsform der Erfindung werden über das Head-Up Display auch Hinweise gegeben, die zwar vom Fahrer unmittelbar erkennbar sind, aber möglicherweise übersehen worden sind. Beispielsweise können für den Fahrer Warnschilder, Geschwindigkeitsbeschränkungen oder andere Verkehrsinformationen als zusätzlicher Hinweis auf das Head-Up Display projiziert werden. Daneben können solche Hinweise, Warnungen und Anzeigen von Gefährdungen auch neben der Anzeige im Head-Up Display durch weitere optische, akustische oder haptische Meldungen - beispielsweise über ein vibrierendes Lenkrad - an den Fahrer weitergegeben werden.

Nach einer weiteren bevorzugten Ausführungsform der Erfindung wird auch die Krümmung der Windschutzscheibe bei der Berechnung der ortskorrekten Bildprojektionsdaten mit berücksichtigt.

Darüber hinaus erlaubt die Erfindung die lmplementierung von verschiedenen Sicherheitsfunktionen:

Verkehrszeichen, wie beispielsweise Geschwindigkeitsbeschränkungen, auf die der Fahrer noch nicht durch Anpassung seiner Geschwindigkeit reagiert hat, können auf dem Head-Up Display ortskorrekt markiert werden.

Auch die Position der Fahrbahn kann in vorteilhafter Weise mit entsprechenden Markierungen auf dem Head-Up Display angezeigt werden. Bei einem drohenden Verlassen der Fahrbahn kann ein zusätzlicher Warnhinweis angezeigt werden.

Ferner können weitere Informationen zur Assistenz des Fahrers eingeblendet werden, wie beispielsweise Einblendungen von Hilfen beim Spurwechsel oder beim Einfädeln in Abbiegespuren (z. B. vor Ampeln oder auf Autobahnausfahrten). Auch Warnungen vor engen Kurven können effizient in das ortskorrekte Head-Up Display eingeblendet werden. Dabei können auch Zusatzinformationen, wie z. B. der Abstand zum rechten Fahrbahnrand, in geeigneter Weise auf dem Head-Up Display visualisiert werden.

Die Einblendung von für den Fahrer unsichtbaren Hindernissen, wie z. B. die Anzeige von Wildtieren im Dunkeln, die sich am Rand der Fahrbahn befinden oder über die Fahrbahn laufen, kann durch die ortskorrekte Einblendung vom Fahrer sehr schnell interpretiert werden. Zur Erfassung solcher unsichtbaren Hindernisse können sogenannte Night-Vision Sensoren, beispielsweise Infrarotkameras, verwendet werden.

Ferner kann das erfindungsgemäße System zusätzliche Warnhinweise und Informationen an den Fahrer über das Head-Up Display ausgeben. Droht beispielsweise eine Kollision mit einem anderen Objekt, wie z. B. einem Fußgänger, einem Kind, einem anderen Verkehrsteilnehmer oder Tieren, so kann das System die entsprechenden gefährdeten Objekte in der Anzeige besonders markieren und / oder hervorheben.

Zusätzlich kann ein mögliches Ausweichmanöver oder mehrere alternative Ausweichmanöver automatisch berechnet werden und in das Head-Up Display eingeblendet werden. Der Fahrer wird auf diese Art und Weise auf die gefährliche Situation aufmerksam gemacht und kann beispielsweise durch eine Bestätigung das Ausweichmanöver auswählen, das dann automatisch von dem Fahrzeug durchgeführt wird.

Falls mehrere Ausweichmanöver zur Auswahl stehen, kann der Fahrer sich zwischen diesen entscheiden. Der Vorteil des Einsatzes eines Head-Up Displays mit ortskorrekter Anzeige in dieser Situation ist insbesondere, dass der Fahrer den Informationsgehalt der Anzeige unmittelbar interpretieren kann und kritische Ausweichmanöver eigenverantwortlich auswählen kann. Die Verantwortung verbleibt nach wie vor beim Fahrer, er kann jedoch bezüglich schwieriger Ausweichmanöver maximal von einem Kollisions-Vermeidungs-Assistenten unterstützt werden.

Ebenso eignet sich die Erfindung zur Realisierung verschiedener Komfortfunktionen, von denen nachfolgenden einige beispielhaft erwähnt werden:

In einer bevorzugten Ausführungsform der Erfindung werden Navigationsinformationen direkt in das Head-Up Display mit Hinweisen, die in die aktuelle Straßenszene passen, eingeblendet. Dies hat den Vorteil, dass die Navigationsinformationen unmittelbar vom Fahrer verstanden werden, ohne dass die Interpretation eines Piktogramms oder dergleichen erforderlich ist.

Beispielsweise , kann die Straße, in die eingebogen werden soll, unmittelbar im Head-Up Display ortskorrekt markiert werden, so dass der Fahrer unmittelbar geführt wird, ohne die Anzeige auf einem gesonderten Navigationsdisplay auf die aktuelle Fahrsituation transferieren zu müssen. Ein weiterer Vorteil ist dabei, dass man ein solches Navigationssystem ohne die sonst erforderliche Eingewöhnungszeit benutzten kann.

Eine weitere bevorzugte Ausführungsform der Erfindung betrifft das automatische Cruise Control. Ein vorausfahrendes Fahrzeug wird dabei in dem Head-Up Display ortskorrekt dargestellt. Dieses Fahrzeug kann als Referenzobjekt für das automatische Cruise Control als sogenanntes "real target" ausgewählt werden und in dem Head-Up Display entsprechend hervorgehoben markiert werden.

In einer weiteren bevorzugten Ausführungsform der Erfindung werden beispielsweise im Stau Filme oder dergleichen über das Head-Up Display eingeblendet. Alternativ können Informationsdienste oder beispielsweise das Internet genutzt werden. Das Display kann in solchen Fällen für den Fahrer und für den Fahrer geteilt werden, so dass beide ihren "eigenen" Bildschirm haben.

Im Weiteren wird ein bevorzugtes Ausführungsbeispiel der Erfindung mit Bezugnahme auf die Zeichnungen näher erläutert. Es zeigen:
- Fig. 1: ein Blockdiagramm einer Ausführungsform eines erfindungsgemäßen Head-Up Display Systems,
- Fig. 2: eine seitliche Teildarstellung eines Fahrzeugs mit einem Head-Up Display System,
- Fig. 3: den Innenraum eines Fahrzeugs mit einem Head-Up Display System,
- Fig. 4: die Anordnung von Sensoren zur Erfassung des Fahrzeugaußenraums,
- Fig. 5: ein Blockdiagramm eines zweiten bevorzugten Ausführungsform eines erfindungsgemäßen Head-Up Display Systems,
- Fig. 6: eine Darstellung auf einem Head-Up Display System aus Sicht eines Fahrzeugführers,
- Fig. 7: eine weitere beispielhafte Darstellung aus Sicht eines Fahrzeugführers,
- Fig. 8: eine weitere beispielhafte Darstellung aus Sicht eines Fahrzeugführers.

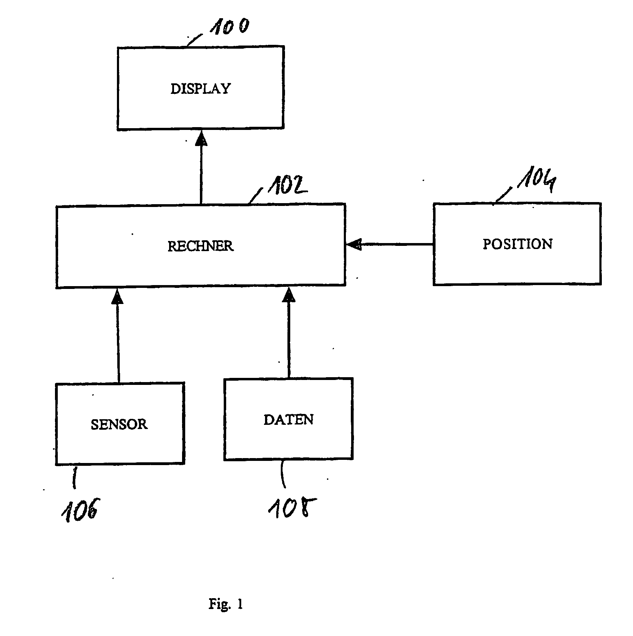

Die Fig. 1 zeigt ein Head-Up Display System mit einem Head-Up Display 100. Das Head-Up Display 100 wird von einem Rechner 102 angesteuert. Ebenso werden die Bilddaten der auf dem Head-Up Display 100 darzustellenden Objekte von dem Rechner 102 generiert.

Der Rechner 102 ist mit einem Innenraumsensierungssystem 104 verbunden. Das Innenraumsensierungssystem 104 beinhaltet mindestens einen Sensor zur Erfassung der Position zumindest eines Insassen des Fahrzeugs. Vorzugsweise wird zumindest eine Position des Fahrers und / oder des Beifahrers erfasst. Besonders vorteilhaft ist die Erfassung der jeweiligen Kopfposition und / oder die Position der Augen und der Blickrichtung.

Der Rechner 102 empfängt ferner Daten von zumindest einem Erfassungssensor 106 zur Erfassung eines Objekts in einem Außenraums des Fahrzeugs. Bei dem Objekt kann es sich um jede relevante Verkehrsinfonnation handeln, beispielsweise einen anderen Verkehrsteilnehmer, einen Fußgänger, Kind, Radfahrer oder Tier auf der Fahrbahn, Verkehrsschilder, Fahrbahnmarkierungen und dergleichen.

Ferner ist der Rechner 102 mit einer Datenbank 108 verbunden. Die Datenbank 108 kann beispielsweise Navigationsdaten beinhalten. In diesem Fall generiert der Rechner 102 aus den Navigationsdaten Bilddaten zur ortskorrekten Anzeige in dem Head-Up Display 100, um dem Fahrer z . B. die Fahrtrichtung anzuzeigen. Beispielsweise kann der Rechner 102 eine Markierung für eine Straße, in die abgebogen werden soll, auf dem Head-Up Display 100 ortskorrekt mit der Straße überlagert einblenden.

Ferner kann die Datenbank 108 auch Videoinformationen, wie z. B. auf DVD gespeicherte Spielfilme oder dergleichen beinhalten. Auch solche Videodaten können über den Rechner 102 auf dem Display 100 zur Anzeige gebracht werden.

Bei der Berechnung der Bilddaten zur Anzeige auf dem Head-Up Display 100 berücksichtigt der Rechner 102 die von dem Innneraumsensierungssystem 104 gelieferte Position des Fahrzeuginsassen, so dass die Anzeige auf dem Head-Up Display 100 ortskorrekt erfolgt. Der Rechner 102 passt dabei die Berechnung der anzuzeigenden Bilddaten jeweils der aktuellen von dem Innenraumsensierungssystem 104 gelieferten Position an.

Wenn das Innenraumsensierungssystem 104 beispielsweise die Kopfposition des Fahrers erfasst, erhält dieser eine ortskorrekte Darstellung der betreffenden Verkehrsinformation auf dem Head-Up Display 100, auch wenn er seine Kopfposition verändert.

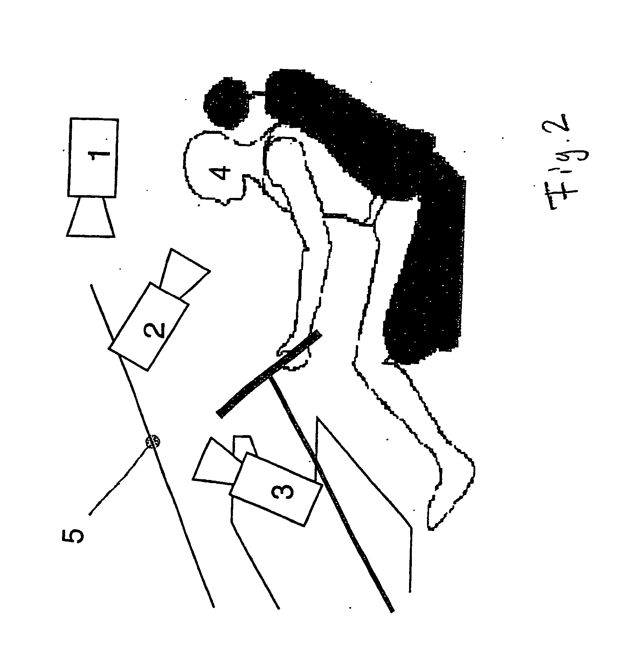

Die Fig. 2 zeigt die Seitenansicht eines Fahrers in einem Fahrzeug. Die Straßenszene vor dem Fahrzeug wird durch einen oder mehrere Erfassungssensoren 1 aufgenommen. Diese dienen zur Erfassung des Fahrzeugaußenraums. Bei einem Erfassungssensor 1 kann es sich beispielsweise um ein Kamerasystem mit einer oder mehreren Kameras handeln, ein oder mehrere Range-Sensoren oder ein oder mehrere Radarsysteme. In dem hier betrachteten Beispiel ist der Erfassungssensor hinter der Windschutzscheibe 5 angeordnet. Dies ist jedoch nicht zwingend; der oder die Erfassungssensoren können auch an anderer beliebiger Stelle des Fahrzeugs angeordnet werden.

Die Position des Fahrers und insbesondere dessen Kopfposition 4 wird durch ein System 2 erfasst, welches in den Innenraum des Fahrzeugs gerichtet ist. Auch dieses System 2 kann beispielsweise durch Video-Range oder Radarsensoren realisiert werden.

Auf der Windschutzscheibe 5 erfolgt durch eine Projektionseinheit 3 im Sichtbereicht des Fahrers ein Head-Up Display. Die Projektionseinheit 3 wird von einem Rechner gesteuert (vgl. Rechner 102 der Fig. 1), der mit den Erfassungssensoren 1 und dem System 2 verbunden ist, um z. B. von den Erfassungssensoren 1 detektierte Objekte im Fahrzeugaußenraum ortskorrekt auf die Windschutzscheibe 5 zu projizieren, und zwar entsprechend der Kopfposition 4.

Die von dem Rechner erzeugten Bilddaten werden also durch ortskorrekte Projektionen auf die Windschutzscheibe 5 der Realstraßenszene so überlagert, dass sich für den Fahrer eine intuitive Interpretation der von dem Rechner zur Verfügung gestellte Informationen ergibt.

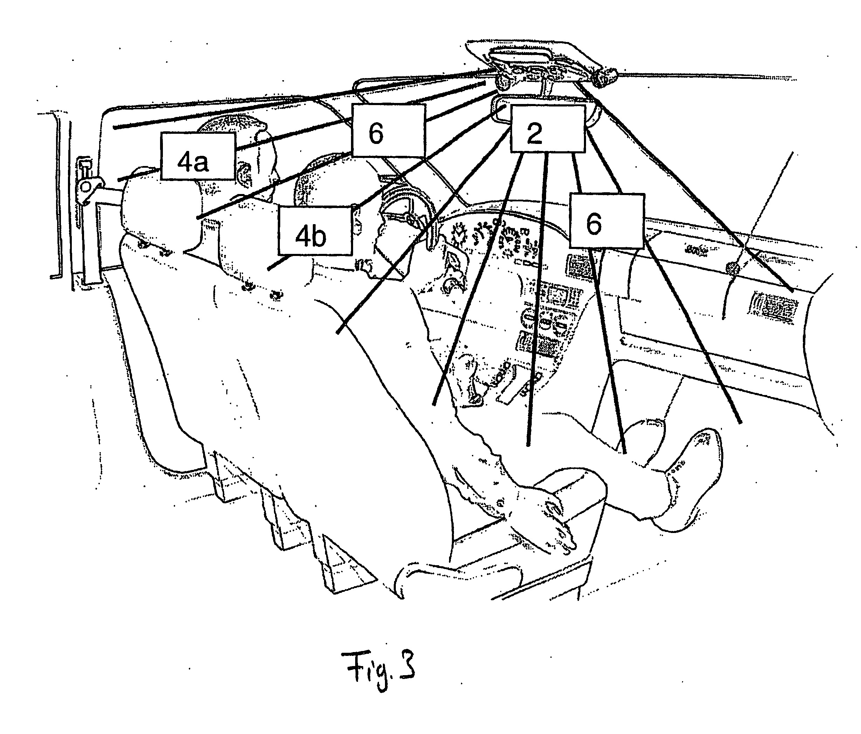

Die Fig. 3 zeigt den Innenraum eines Fahrzeugs mit einem Erfassungsbereich 6 des System 2. Der Erfassungsbereich 6 ist derjenige Bereich, innerhalb dessen das System 2 eine Position beispielsweise des Fahrers und / oder des Beifahrers sowie der entsprechenden Kopfpositionen ermitteln kann. In dem Beispiel der Fig. 3 ermittelt das System 2 in dem Erfassungsbereich 6 die Kopfpositionen 4a und 4b des Fahrers bzw. des Beifahrers im Innenraum des Fahrzeugs.

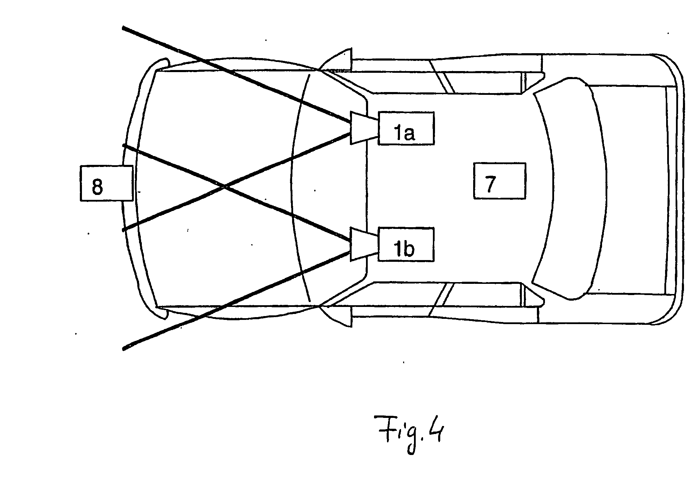

Die Fig. 4 zeigt ein Fahrzeug 7. In einem Bereich hinter der Windschutzscheibe des Fahrzeugs 7 befindet sich ein Paar Erfassungssensoren 1a und 1b. Diese haben einen Erfassungsbereich 8 im Außenraum des Fahrzeugs. Die Erfassungssensoren 1a und 1b können als Stereosensoren zur Erzeugung von dreidimensionalen Bilddaten ausgebildet sein.

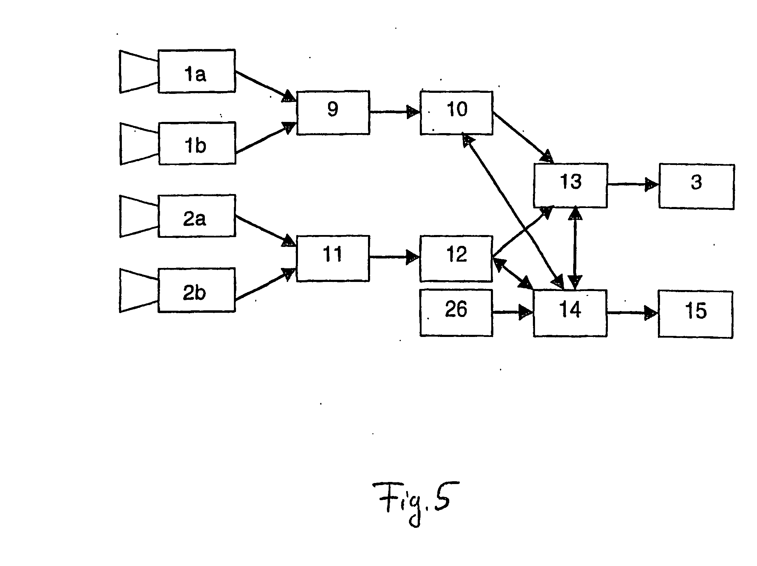

Die Fig. 5 zeigt ein Blockdiagramm zur Realisierung einer weiteren Ausführungsform eines Head-Up Display Systems. Elemente der Fig. 5, die Elementen der Figuren 2, 3 und 4 entsprechen, sind mit denselben Bezugszeichen gekennzeichnet.

Das System der Fig. 5 beinhaltet Erfassungssensoren 1a und 1b für den Fahrzeugsaußenraum. Ferner beinhaltet das System weitere Umfelderfassungssensoren des Systems 2 (vgl. Fig. 2 und 3), d.h. die Innenraumsensoren 2a und 2b.

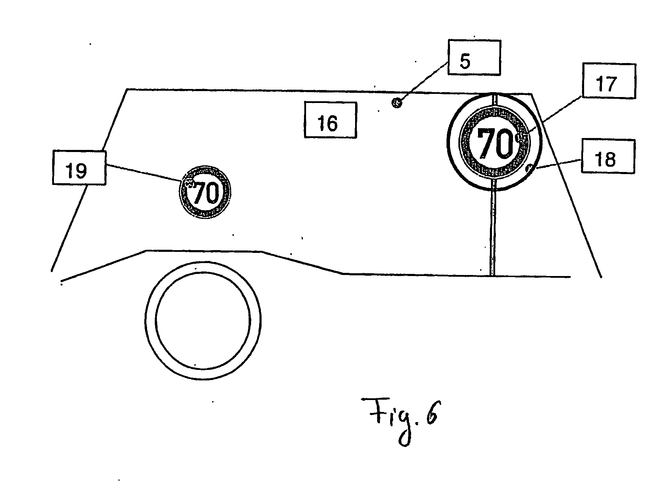

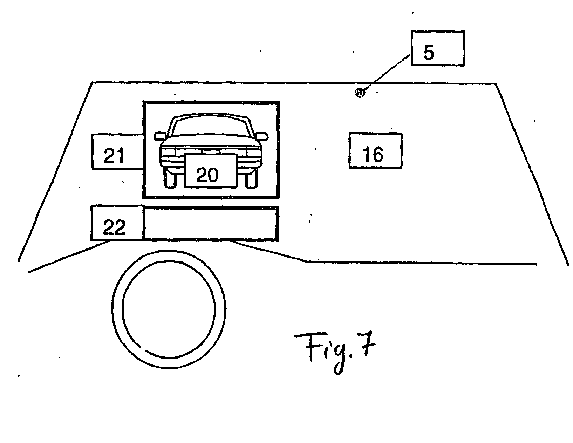

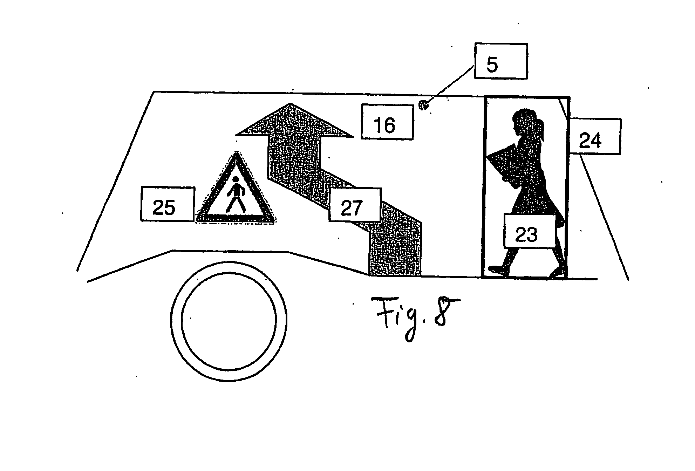

Die von den Erfassungssensoren 1a und 1b gelieferten Daten werden von einer Rechen- und Algorithmikeinheit 9 verarbeitet. Aufgrund der Verarbeitung in der Rechen- und Algorithmikeinheit 9 werden die von den Erfassunssensoren 1a und 1b ermittelten Daten einem oder mehreren Mustern des Außenraums des Fahrzeugs 7 zugeordnet. Hierbei kann es sich beispielsweise um Muster für Verkehrszeichen (vgl. Fig. 6), für vorausfahrenden Fahrzeuge (vgl. Fig. 7), für Fußgänger (vgl. Fig. 8) und / oder für den Straßenverlauf oder für andere Objekte im Außenraum des Fahrzeuges 7 handeln. Die von den Erfassungssensoren 1a und 1 b gelieferten Daten werden mittels einer Mustererkennung einem oder mehreren der Muster zugeordnet. Auf diese Art und Weise können beispielsweise von den Verfassungssensoren 1a und 1b abgebildete Verkehrszeichen im Außenraum des Fahrzeugs erkannt und ortskorrekt visualisiert werden. Aus dieser Mustererkennung resultiert ein Modell 10 des Aussenraums.

Das Head-Up Display System weist ferner Innenraumsensoren 2a und 2b zur Erfassung des Fahrzeuginnenraums auf. Die von den Innenraumsensoren 2a und 2b gelieferten Daten werden von einer Rechen- und Algorithmikeinheit 11 verarbeitet. Mittels einer Mustererkennung wird durch die Rechen- und Algorithmikeinheit 11 ein Modell 12 des Fahrzeuginnenraums erzeugt, insbesondere hinsichtlich der Position des Fahrerkopfs und optional des Beifahrerkopfes.

Das Modell des Fahrzeuginnenraums kann jedoch auch noch weitere Komponenten beinhalten, die in weiteren Verfahrensschritten ausgewertet werden können. Insbesondere kann das Modell des Fahrzeuginnenraums die Augenposition eines oder mehrere der Insassen, insbesondere des Fahrers und oder des Beifahrers, sowie die jeweilige Blickrichtung beinhalten.

Die Modelle 10 und 12 des Fahrzeugaußenraums bzw. des Fahrzeuginnenraums werden von einer Berechnungseinheit 13 genutzt, um fahrerrelevante Informationen an ortskorrekten Positionen über die Projektionseinheit 3 anzuzeigen. Die ortskorrekte Anzeige von Informationen aus dem Fahrzeugumfeld erfolgt basierend auf der Verarbeitung von Objektpositionen im Fahrzeugumfeld und der Position zumindest einer der Insassen, das heißt, beispielsweise der Position der Augen des Fahrers.

Weitere Auswertungen bezüglich der Modelle 10 und 12, Informationen aus der Berechnungseinheit 13, Daten weiterer Fahrzeugsensoren 26 betreffend das Fahrzeugumfeld sowie anderer in der Fig. 5 nicht gezeigter Sensoren die Daten hinsichtlich des Betriebs des Fahrzeugs selbst liefern, werden einem optionalen Controller 14 zugeführt, der in die Berechnungseinheit 13 eingreifen kann und der weitere Informationen und / oder Warnungen über geeignete Ausgabegeräte 15 - z. B. akustische, visuelle und oder haptische Aktuaturen - ausgeben kann.

Die Fig. 6 zeigt den Blick des Fahrers durch die Windschutzscheibe 5 auf eine Straßenszene 16. In der Straßenszene 16 steht beispielsweise ein Verkehrszeichen 17, das von den Erfassungssensoren 1 detektiert wird. Unter Berücksichtigung der Kopfposition des Fahrers 4 wird von der Projektionseinheit 3 ortskorrekt eine Markierung 18 um das Verkehrszeichen herum auf die Windschutzscheibe 5 projiziert, um das Verkehrszeichen hervorzuheben.

Ferner kann der Fahrer auf dem Head-Up Display eine zusätzliche geeignete Warnung in seinen direkten Sichtbereich eingeblendet bekommen. Im konkreten Fall wird das erkannte Verkehrszeichen 17 nochmals als Symbol 19 eingeblendet.

Dies kann etwa dann erfolgen, wenn der Fahrer die Geschwindigkeitsbeschränkung nicht beachtet.

Eine weitere Anwendung zeigt die Darstellung der Fig. 7. Hierbei wird ein Fahrzeug 20, welches sich innerhalb der aktuellen Straßenszene 16 aufhält, durch eine Markierung 21 in der Projektion des Head-Up Display hervorgehoben. Zusätzliche Informationen über das vorausfahrende Fahrzeug 20 können in einem Fenster 22 unterhalb des Fahrzeugs 20 in direktem Sichtbereich des Fahrers angezeigt werden. Hierbei kann es sich etwa um die Entfernung zu dem vorausfahrenden Fahrzeug 20 und / oder die Differenzgeschwindigkeit handeln. Ferner kann der Fahrer das vorausfahrende Fahrzeug 20 mit der Markierung 21 selektieren, so dass es als Referenzobjekt für ein automatische Cruise Control System dient.

Die Fig. 8 zeigt eine weitere Anwendungssituation, bei der ein Fußgänger 23 in der aktuellen Straßenszene beispielsweise von rechts in den Fahrbereich des Fahrzeugs kommt. Dies kann eine ernste Gefährdung des Fußgängers und auch des Fahrzeugs und des Fahrers bedeuten. Um beispielsweise die Aufmerksamkeit des Fahrers auf den Fußgänger zu lenken, wird im Sichtbereich des Fahrers eine geeignete Warnung durch ein Symbol 25 eingeblendet und der Fußgänger 23 durch eine ortskorrekte Darstellung über die Projektionseinheit 3 eingeblendet.

Dies ist insbesondere dann erforderlich, wenn der Fußgänger 23 für den Fahrer nicht oder nur sehr schlecht aufgrund der Beleuchtungsverhältnisse erkennbar ist. Zusätzlich kann ein Rahmen 24 um den Fußgänger 23 eingeblendet werden, um diesen besonders hervorzuheben.

Gleichzeitig kann über ein Symbol 27 ein mögliches Ausweichmanöver über die Projektionseinheit 3 Head-Up eingeblendet werden. Es können auch ein oder mehrere alternative Ausweichmanöver durch weitere Symbole eingeblendet werden. Selektiert der Fahrer eines der angebotenen Ausweichmanöver, so wird dieses von dem Fahrzeug automatisch ausgeführt.

### Bezugszeichenliste

- Erfassungssensoren: 1
- System: 2
- Projektionseinheit: 3
- Kopfposition: 4
- Windschutzscheibe: 5
- Erfassungsbereich: 6
- Fahrzeug: 7
- Erfassungsbereich: 8
- Rechen- und Algorithmikeinheit: 9
- Modell: 10
- Rechen- und Algorithmikeinheit: 11
- Fahrzeuginnenraum: 12
- Berechnungseinheit: 13
- Controller: 14
- Ausgabe: 15
- Straßenszene: 16
- Verkehrszeichen: 17
- Markierung: 18
- Symbol: 19
- Fahrzeug: 20
- Markierung: 21
- Fenster: 22
- Fußgänger: 23
- Rahmen: 24
- Symbol: 25
- Symbol: 27

## Patentansprüche

1. Head-Up Display System zur Hervorhebung eines Verkehrszeichens mit Erfassungssensoren zum Detektieren eines Verkehrszeichens, mit Mitteln (2, 104) zur Erfassung einer Kopfposition (4) zumindest des Fahrers eines Fahrzeugs (7), mit Mitteln (13, 102) zur Berechnung von Bilddaten für die Darstellung der Markierung um das Verkehrszeichen herum basierend auf von den Mitteln zur Erfassung der Kopfposition gelieferten Daten, wobei eine Markierung (18) derart in Abhängigkeit von der Kopfposition (4) auf eine Windschutzscheibe (5) projiziert wird, dass der Fahrer die Markierung (18) als um das Verkehrszeichen (17) herum angeordnet wahrnimmt.

2. Head-Up Display System nach Anspruch 1, wobei die Erfassungssensoren ein oder mehrere der folgenden Sensoren aufweisen: Videokamera, Radarsensor, Lidarsensor, Range-Imager, Time-Off-Flight-Sensor, Night-Vision-Sensor, Infrarotsensor.

3. Head-Up Display System nach einem der vorherigen Ansprüche, mit Sensoren zur Erzeugung eines zwei- oder dreidimensionalen Bildes eines Bereichs des Fahrzeugaußenraums, insbesondere Stereosensoren.

4. Head-Up Display System nach einem der vorhergehenden Ansprüche, bei dem die Mittel zur Erfassung der Kopfposition eine Sensoranordnung mit mindestens einem oder mehreren Sensoren beinhaltet und als Sensoren vorzugsweise Videokameras, Radarsensoren, Lidarsensoren, Range-Imager, Time-Off-Flight-Sensoren, Night-Vision-Sensoren und Infrarotsensoren sowie andere Sensoren zur Erzeugung eines zwei- oder dreidimensionalen Bildes des Fahrzeuginnenraums verwendet werden.

5. Head-Up Display System nach einem der vorhergehenden Patentsprüche mit Mitteln (26) zur Generierung von Warnhinweisen, Empfehlungen und / oder Gefahrenhinweisen in Bezug auf das hervorgehobene Verkehrszeichen.

6. Head-Up Display System nach einem der vorherigen Ansprüche, **dadurch gekennzeichnet, dass** das Verkehrszeichen zusätzlich in einem direkten Sichtbereich des Fahrers als Symbol eingeblendet wird.

7. Head-Up Display System nach einem der vorhergehenden Ansprüche mit Mitteln zu einer für den Fahrer sichtbaren Überlagerung der Darstellung von projizierten Objekten einer Assistenzfunktion über sichtbare Objekte des realen Fahrzeugaüßenraums in Abhängigkeit von der Fahrsituation, insbesondere zur Assistenz beim Spurwechsel und beim Wechsel auf Abbiegespuren.

8. Head-Up Display System nach einem der vorhergehenden Ansprüche mit Mitteln zum Einblenden eines Hinweises und / oder einer Warnung, wenn sich der Kopf des Fahrers und / oder des Beifahrers insbesondere in Bezug auf einen Airbag in einer ungünstigen Position befindet.

9. Head-Up Display System nach einem der vorhergehenden Ansprüche mit Rechnermitteln zur Berechnung einer Darstellung der Markierung durch Zugriff auf eine Datenbank oder eine Datei.

10. Head-Up Display System nach Anspruch 9, **dadurch gekennzeichnet, dass** die Datenbank Videoinformationen beinhaltet.

11. Head-Up Display System nach Anspruch 10, bei dem die Darstellung der Videoinformationen von dem System unterhalb einer maximalen Fahrzeuggeschwindigkeit freigegeben ist.

12. Head-Up Display System nach einem der vorhergehenden Ansprüche, bei dem die Mittel zur Erfassung einer Kopfposition auch zur Erfassung zumindest einer Kopfposition des Beifahrers und die Mittel zur Darstellung der Markierung zumindest auch zur Darstellung in Bezug auf die Kopfposition des Beifahrers ausgebildet sind.

13. Verfahren zur Head-Up Darstellung einer Markierung eines Verkehrszeichens auf einer Windschutzscheibe mit folgenden Schritten:
- Erfassen eines Verkehrszeichens im Fahrzeugaußenraum,
- Erfassen einer Kopfposition eines Fahrers eines Fahrzeugs,
- Berechnen von Bilddaten für die Darstellung der Markierung des Verkehrszeichens bezüglich der Kopfposition des Fahrers,
- Head-Up Projektion der Bilddaten auf der Windschutzscheibe in der Weise, dass der Fahrer die Markierung (18) als um das Verkehrszeichen (17) herum angeordnet wahrnimmt.

14. Verfahren nach Anspruch 13, bei dem zur Darstellung der Markierung auf eine Datenbank oder eine Datei zugegriffen wird.

15. Computerprogrammprodukt auf einem computerlesbaren Medium oder einer über ein Computernetzwerk übertragbaren Datei mit Programmmitteln zur Durchführung eines Verfahrens nach einem der vorhergehenden Ansprüche 13 bis 14, wenn das Computerprogramm auf einem elektronischen System, insbesondere einem Head-Up Display System oder einem Navigationssystem oder einem System für ein automatisches Cruise Control, ausgeführt wird.

## Claims

1. Head-up display system for highlighting a road sign with detection sensors for detecting a road sign, with means (2, 104) for sensing a position (4) of the head at least of the driver of a vehicle (7), with means (13, 102) for calculating image data for displaying the marking around the road sign based on data supplied by the means for sensing the position of the head, wherein a marking (18) is projected onto a windscreen (5) as a function of the position (4) of the head in such a way that the driver perceives the marking (18) as being arranged around the road sign (17).

2. Head-up display system according to Claim 1, wherein the detection sensors have one or more of the following sensors: video camera, radar sensor, lidar sensor, range imager, time-off flight sensor, night-vision sensor, infrared sensor.

3. Head-up display system according to one of the preceding claims, with sensors for generating a two-dimensional or three-dimensional image of an area of the space outside the vehicle, in particular stereo sensors.

4. Head-up display system according to one of the preceding claims, in which the means for sensing the position of the head includes a sensor arrangement with at least one or more sensors, and the sensors used are preferably video cameras; radar sensors, lidar sensors, range imagers, time-off flight sensors, night-vision sensors and infrared sensors as well as other sensors for generating a two-dimensional or three-dimensional image of the interior of the vehicle.

5. Head-up display system according to one of the preceding claims with means (26) for generating warning messages, recommendations and/or messages about hazards with respect to the highlighted road sign.

6. Head-up display system according to one of the preceding claims, **characterized in that** the road sign is additionally displayed as a symbol in the direct field of vision of the driver.

7. Head-up display system according to one of the preceding claims with means for superimposing, in a way which can be seen by the driver, the representation of projected objects of an assistance function over visible objects of the real space outside the vehicle as a function of the driving situation, in particular in order to provide assistance when changing lane and when changing onto turning-off lanes.

8. Head-up display system according to one of the preceding claims, with means for displaying a message and/or a warning if the head of the driver and/or of the front seat passenger is located in an unfavourable position, in particular with respect to an airbag.

9. Head-up display system according to one of the preceding claims with computing means for calculating a representation of the marking by accessing a database or a file.

10. Head-up display system according to Claim 9, **characterized in that** the database contains video information.

11. Head-up display system according to Claim 10, in which the representation of the video information is enabled by the system below a maximum velocity of the vehicle.

12. Head-up display system according to one of the preceding claims in which the means for sensing a position of the head are also designed to sense at least one position of the head of the front seat passenger, and the means for displaying the marking are designed at least also for presenting a display with respect to the position of the head of the front seat passenger.

13. Method for the head-up display of a marking of a road sign on a windscreen, with the following steps:
- sensing of a road sign in the space outside a vehicle,
- sensing of a position of the head of a driver of a vehicle,
- calculation of image data for displaying the marking of the road sign with respect to the position of the head of the driver,
- head-up projection of the image data on the windscreen in such a way that the driver perceives the marking (18) as being arranged around the road sign (17).

14. Method according to Claim 13 in which a database or a file is accessed in order to display the marking.

15. Computer program product on a computer-readable medium or a file which can be transmitted by means of a computer network, with program means for carrying out a method according to one of the preceding Claims 13 and 14 if the computer program is executed on an electronic system, in particular a head-up display system or a navigation system or a system for automatic cruise control.

## Revendications

1. Système de visualisation tête haute pour remarquer un panneau de signalisation, comportant des capteurs pour détecter un tel panneau, des moyens (2,104) pour saisir la position de tête (4) au moins du conducteur d'un véhicule automobile (7), des moyens (13, 102) pour calculer des données d'image pour figurer le marquage autour du panneau de signalisation en se basant sur les données fournies par les moyens de saisie de la position de tête (4),
**caractérisé en ce qu'**
un marquage (18) est projeté sur un pare-brise (5) en fonction de la position de tête (4), de manière que le conducteur perçoit le marquage (18) comme entourant le panneau de signalisation (17).

2. Système de visualisation tête haute selon la revendication 1,
**caractérisé en ce que**
les capteurs de détection comprennent un ou plusieurs des capteurs suivants :caméra vidéo, détecteur radar, détecteur lidar, imageur de télémétrie, capteur de temps de passage, capteur de vision nocturne, détecteur infrarouge.

3. Système de visualisation tête haute selon la revendication 1 ou 2,
**caractérisé en ce qu'**
il comprend des détecteurs, notamment des détecteurs stéréo, pour obtenir une image en deux ou trois dimensions d'une zone de l'environnement du véhicule.

4. Système de visualisation tête haute selon une des revendications précédentes,
**caractérisé en ce que**
les moyens pour saisir la position de tête utilisent un système de détecteur comprenant au moins un ou plusieurs détecteurs qui sont de préférence des caméras-vidéo, des détecteurs radar, des détecteurs lidar, des imageurs de télémétrie, des capteurs de temps de passage, des capteurs de vision nocturne, des détecteurs infrarouge ainsi que d'autres détecteurs pour produire une image bi-ou tridimensionnelle de l'habitacle du véhicule.

5. Système de visualisation tête haute selon une des revendications précédentes,
**caractérisé en ce qu'**
il comporte des moyens (26) pour engendrer des indications d'alerte, des recommandations et/ou des indications de danger en rapport avec le panneau de signalisation remarqué.

6. Système de visualisation tête haute selon une des revendications précédentes,
**caractérisé en ce que**
le panneau de signalisation est de plus projeté dans la zone de vision directe du conducteur sous la forme d'un symbole.

7. Système de visualisation tête haute selon une des revendications précédentes, avec des moyens pour, à la superposition de la représentation, visible par le conducteur, d'objets projetés, apporter une fonction d'assistance par l'intermédiaire d'objets visibles faisant partie de l'environnement réel du véhicule, en fonction de la situation de circulation, en particulier pour apporter une assistance aux changements de voie et aux changements de virage.

8. Système de visualisation tête haute selon une des revendications précédentes,
**caractérisé en ce que**
il comprend des moyens pour projeter une indication et/ou une alerte si la tête du conducteur et/ou du passager se trouve notamment occuper une position défavorable par rapport à un airbag.

9. Système de visualisation tête haute selon une des revendications précédentes,
**caractérisé en ce qu'**
il comprend des moyens de calcul pour réaliser une représentation du marquage en utilisant une banque de données ou un fichier.

10. Système de visualisation tête haute selon la revendication 9,
**caractérisé en ce que**
la banque de données contient des informations vidéo.

11. Système de visualisation tête haute selon la revendication 10,
**caractérisé en ce que**
la représentation des informations vidéo est délivrée par le système en dessous d'une vitesse maximale du véhicule.

12. Système de visualisation tête haute selon une des revendications précédentes,
**caractérisé en ce que**
les moyens pour saisir une position de tête sont conçus pour saisir au moins une position de tête du passager et les moyens de représentation du marquage sont conçus également pour assurer une représentation en fonction de la position de tête du passager.

13. Procédé pour la visualisation tête haute, sur un pare-brise, d'un marquage de panneau de signalisation, présentant les étapes suivantes :
- saisie d'un panneau de signalisation dans l'espace externe du véhicule,
- saisie de la position de tête du conducteur d'un véhicule,
- calcul des données d'image pour la représentation du marquage du panneau de signalisation, par rapport à la position de tête du conducteur,
- projection tête haute des données d'image sur le pare-brise, de manière que le conducteur perçoit le marquage (18) comme entourant le panneau de signalisation (17).

14. Procédé selon la revendication 13,
**caractérisé en ce qu'**
il est fait appel à une banque de données ou à un fichier pour assurer la représentation du marquage.

15. Produit constitué par un programme d'ordinateur déposé sur un moyen lisible par l'ordinateur ou sur un fichier transmissible par l'intermédiaire d'un réseau d'ordinateurs avec des moyens de programme pour réaliser un procédé selon la revendication 13 ou 14, ce programme étant mis en oeuvre sur un système électronique, en particulier un système de visualisation tête haute ou un système de navigation, ou un système pour un contrôle automatique de conduite.
